# EUROPÄISCHE PATENTANMELDUNG

(11) **EP 2 314 970 A1**
(43) Veröffentlichungstag der Anmeldung: **27.04.2011**
(21) Anmeldenummer: 10188887.3
(22) Anmeldetag: 26.10.2010
(51) Int. Cl.: F28D 20/00

(54) **Thermischer Schichtspeicher**

(30) Priorität: 26.10.2009 CH 16352009; 23.12.2009 CH 19872009
(71) Anmelder: Ramani, Dritan, 7012 Felsberg (CH)
(72) Erfinder: Ramani, Dritan, 7012 Felsberg (CH)
(74) Vertreter: Hasler, Erich

(57) **Zusammenfassung**

Ein thermischer Schichtspeicher besitzt mindestens einen als Speicherkammer dienenden ersten Behälter zur Aufnahme eines Wärmetransfermediums und mindestens einen zweiten, an den ersten Behälter über eine Trennwand (14) seitlich angrenzenden, als Einström- und Schichtungskammer (15, 16) dienenden zweiten Behälter. In der Trennwand zwischen dem ersten und zweiten Behälter ist mindestens eine Durchtrittsöffnung (21) vorgesehen. Zur Zuführung des Wärmetransfermediums führt ein Leitkanal (27) in den zweiten Behälter. Der Leitkanal hat eine Austrittsöffnung, die so ausgebildet und/oder angeordnet ist, dass im Betrieb im Wesentlichen eine horizontale Einströmung in die Schichtungskammer (15, 16) resultiert. Im Abstand von der Austrittsöffnung und im Wesentlichen in Einströmungsrichtung des Wärmetransfermediums ist eine Prallwand (19) angeordnet, von welcher das einströmende Wärmetransfermedium zurückprallt.

## Beschreibung

### Gebiet der Erfindung

Die Erfindung betrifft einen thermischen Schichtspeicher gemäss Oberbegriff des Anspruchs 1, der sich auszeichnet durch mindestens einem als Speicherkammer dienenden ersten Behälter zur Aufnahme eines Wärmetransfermediums, mindestens einem zweiten, an den ersten Behälter über eine Trennwand seitlich angrenzenden, als Einström- und Schichtungskammer dienenden zweiten Behälter, und mindestens einer in der Trennwand vorgesehenen Durchtrittsöffnung zwischen dem ersten und zweiten Behälter.

### Stand der Technik

Thermische Schichtspeicher dienen als Wärme- und Kältespeicher und finden sowohl in der Haustechnik als auch in der Industrie Verwendung. Im Wesentlichen handelt es sich um mit einem flüssigen Medium füllbare Behälter, meistens Wasser. Dieses wird über einen Vorlauf zugeführt und über einen Rücklauf abgeführt. Ein thermischer Schichtspeicher kann im Prinzip mit einer beliebigen Wärmequelle zusammenwirken, vom herkömmlichen Heizkessel bis zum durch Wärmetausch nutzbar gemachten Solarkollektoren-Kreislauf.

Zu hohe Strömungsgeschwindigkeiten innerhalb des Schichtspeichers führen zu Störungen der Schichtung und beeinträchtigen somit die Effizienz des thermischen Schichtspeichers. In Verbindung mit Solarkollektoranlagen erfolgt die Warmwasserzufuhr nicht in gleichbleibender, sondern je nach Tageszeit und Witterungsentwicklung in höchst unterschiedlicher Temperatur. Gerade hier kommt es also auf eine möglichst verwirbelungsfreie Schichtung der jeweiligen Temperaturbereiche an. Zu diesem Zweck ist es bekannt, das erwärmte Wasser in eine koaxial im Inneren des Speicherbehälters angeordnete Schichtungskammer zu führen. Von dort fliesst das Wasser durch Reihen von auf unterschiedlicher Höhe angebrachten Durchflussöffnungen geschichtet in die die Schichtungskammer umgebende Ringkammer des Speicherbehälters. Aus dieser kann das gespeicherte Wasser schliesslich dem Verbraucher zugeleitet werden. Mit derartig aufgebauten Schichtspeichern konnte den Nachteilen jedoch nur teilweise begegnet werden. Sie vermögen weder konstruktionstechnisch noch hinsichtlich einer optimalen Schichtung und damit einhergehend auch nicht bezüglich der Effizienz zu überzeugen.

Auch andere bekannte thermische Schichtspeicher bergen ähnliche Nachteile und verlieren beim Anschluss von einer Mehrzahl von unterschiedlichen Wärmeerzeugern an Effizienz. Einige sind im Weiteren speziell erwähnt.

Im Gebrauchsmuster DE 299 20 954 U1 liegt ein Speicherbehälter vor mit drei vertikal übereinander liegenden Unterbereichen. In jedem Bereich wird entsprechend den Temperaturerfordernissen oder -gegebenheiten eine andere Art Energieerzeuger oder Verbraucher angeschlossen. Aufgrund der gegebenen Konstruktion des Speicherbehälters kann eine Solaranlage eine Gebäudeheizung entlasten.

Im Gebrauchsmuster DE 202 20 554 U1 wird ein Wasserspeicher mit mehreren Steigleitungen beschrieben. Jede Steigleitung führt hierbei in eine andere Temperaturschicht, d.h. Höhe, des Wasserspeichers und soll dadurch eine optimale Schichtung ermöglichen. Die Schichtungsqualität hängt mit der vorhandenen Anzahl Steigrohrleitungen und deren Längenvertellung zusammen.

Aus der Offenlegungsschrift DE 197 43 563 A1 ist ein Wärmeschichtspeicher mit einem vertikal ausgerichteten Speicherbehälter bekannt. Zur Verminderung von Durchmischungsverlusten weist der Speicherbehälter ein Hauptspeichervolumen und ein Nebenspeichervolumen auf. Eine Einleitung mündet in das Nebenspeichervolumen, welches über eine Öffnung mit dem Hauptspeichervolumen verbunden ist. Die Öffnung, welche Neben- und Hauptspeichervolumen verbindet, erstreckt sich entlang dem Temperaturgefälle über die gesamte Höhe des Wärmeschichtspeichers. Der Nebenspeicher ist dergestalt ausgeformt, dass eine einströmende Flüssigkeit entlang von Wänden einer vorgegebenen Wegstrecke folgt und sich dabei gleichzeitig in die entsprechende Temperaturschicht einschichtet. Um eine effektive Schichtung zu erzielen, ist die Wegstrecke im Nebenspeicher jedoch ziemlich lang. Aufgrund der benötigten grossen Wegstreckenlänge im Nebenspeicher ist z.B. die Anzahl der Nebenspeicher und somit der Einleitungen beschränkt. Wenn das Nebenspeichervolumen nämlich einen Ringraum um den Hauptspeicher bildet, kann vorteilhafterweise nur eine Einleitung gelegt werden, da das Nebenspeichervolumen den Hauptspeicher über mehr als die Hälfte seines Umfangs umfasst. Zwei oder mehr Nebenspeicher mit entsprechenden Einleitungen werden gemäss der Offenbarung lediglich vertikal übereinander angeordnet. Eine derartige vertikal überlappende Anordnung von Nebenspeichern hat jedoch den Nachteil, dass sich das jeweilige Nebenspeichervolumen nicht gleichzeitig über die gesamte Höhe des Wärmeschichtspeichers erstreckt. Hierdurch ist die Verwendbarkeit jedes einzelnen Nebenspeichervolumens stark eingeschränkt. Insbesondere muss der angeschlossene Wärmeerzeuger entsprechend der vertikalen Position des Nebenspeichers ausgewählt werden. Die Einsetzbarkeit eines in DE 197 43 563 A1 beschriebenen Wärmeschichtspeichers ist somit nicht völlig versatil.

### Aufgabe der Erfindung

Auf der Grundlage obiger Erkenntnisse setzt sich die Erfindung die Aufgabe, einen thermischen Schichtspeicher zu schaffen, bei dem die Strömungsgeschwindigkeit soweit verlangsamt ist, dass eine Schichtung eines flüssigen Mediums durch rein physikalische Kräfte und eine verbesserte Ausnützung der Heizenergie möglich ist. Im Weiteren ist es ein Ziel, einen Schichtspeicher bereitzustellen, an welchen eine Mehrzahl von unterschiedlichen Wärmeerzeugern angeschlossen werden kann. Noch ein Ziel ist es, einen Schichtspeicher bereitzustellen, welcher sich kostengünstig herstellen lässt. Ein weiteres Ziel ist es, einen effizienten Schichtspeicher bereitzustellen, bei welchem die Schichtung weder durch Brauchwasserentnahme noch durch den Anschluss von Wärmeerzeugern gestört wird.

### Beschreibung

Der erfindungsgemässe thermische Schichtspeicher entspricht den Merkmalen des Patentanspruchs 1. Weitere vorteilhafte Ausbildungen des Erfindungsgedankens sind aus den abhängigen Patentansprüchen ersichtlich.

Erfindungsgemäss wird die Aufgabe bei einem Schichtspeicher gemäss Oberbegriff von Anspruch 1 dadurch gelöst, dass zur Zuführung eines Wärmetransfermediums (hier auch Medium genannt) ein Leitkanal, Zufluss oder Einlaufrohr in den zweiten Behälter führt, dass der Leitkanal (d.h. der Zufluss oder das Einlaufrohr) und eine zugehörige Austrittsöffnung so ausgebildet und/oder angeordnet sind, dass im Betrieb im Wesentlichen eine horizontale Einströmung des Wärmetransfermediums in den zweiten Behälter resultiert, und dass im Abstand von der Austrittsöffnung in Einströmungsrichtung des Wärmetransfermediums eine Prallwand angeordnet ist. Eine überwiegend horizontale Einströmung wird z.B. dadurch erreicht, dass der Leitkanal in einen im Wesentlichen horizontalen Rohrabschnitt mündet. Abweichungen des endständigen Rohrabschnitts von der Horizontalen in der Größenordnung von weniger als ± 30 Grad, vorzugsweise weniger als 20 Grad und besonders bevorzugt von weniger als 10 Grad sind jedoch denkbar. Der Leitkanal, bzw. der Zufluss oder das Einlaufrohr, erstreckt sich gegebenenfalls in den zweiten Behälter hinein. Eine beliebige Rohrleitung kann als Zufluss, Einlaufrohr oder Leitkanal dienen. Die Prallwand, welche im Abstand von der Austrittsöffnung und in der Einströmungsrichtung des in die Schichtungskammer einströmenden Mediums angeordnet ist, begrenzt die weitere Ausdehnung des einströmenden Mediums in der Einströmungsrichtung. Der erfindungsgemässe Schichtspeicher hat den Vorteil, dass einströmendes Medium im zweiten Behälter bereits weitgehend entschleunigt wird und die Schichtung des Mediums im Schichtspeicher daher nicht durch das gerade einströmende Medium gestört wird. Dies hat den Vorteil, dass ein steiler Temperaturgradient im Schichtspeicher realisierbar ist und der Schichtspeicher sehr effizient ist.

Zur Zuführung des Wärmetransfermediums kann am zweiten Behälter mindestens eine Anschlussöffnung vorgesehen sein. Zur Entnahme des Wärmetransfermediums kann am ersten Behälter mindestens ein Entnahmestutzen vorgesehen sein, insbesondere z.B. unten am ersten Behälter ein erster Entnahmestutzen und oben am ersten Behälter ein zweiter Entnahmestutzen.

Vorteilhafterweise ist die Prallwand im Wesentlichen normal zum horizontalen Strömungsrichtungsanteil des einströmenden Mediums angeordnet. Daraus folgt, dass die Prallwand im Regelfall auch ungefähr vertikal ausgerichtet ist. Abweichungen der Ausrichtung der Prallwand von der Vertikalen in der Größenordnung von weniger als ± 30 Grad, vorzugsweise weniger als 20 Grad und besonders bevorzugt von weniger als 10 Grad sind jedoch denkbar. Da die Einströmung bevorzugt aus einem horizontalen Rohrabschnitt erfolgt, ist der horizontale Strömungsanteil der gesamten Einströmung, der im Wesentlichen senkrecht auf die Prallwand aufprallt hoch. Das einströmende Medium tritt auf die Prallwand auf und wird durch diese zur Umkehr gezwungen. An der Prallwand wird das Medium entsprechend seiner Geschwindigkeit, Temperatur und Dichte mehr oder weniger stark nach oben und/oder unten abgelenkt und gleichzeitig in die Gegenrichtung der anfänglich horizontalen Einströmungsrichtung umgelenkt. Das einströmende Medium prallt somit an der Prallwand ab und fliesst wiederum durch die Schichtkammer zu den Durchtrittsöffnungen. Die entschleunigte Strömung kann sich nun entsprechend ihrer Temperatur, d.h. ihrer Dichte, auf ihrem Weg zu den Durchtrittsöffnungen weiter in die entsprechende Temperaturschicht einschichten. Durch das Design der Schichtkammer wird eine lange Entschleunigungsstrecke für das einströmende Medium realisiert, welche länger als die Ausdehnung der Kammer in der horizontalen Richtung ist. Von Bedeutung ist, dass das einströmende Medium in vorzugsweise laminarer Strömung an den Durchtrittsöffnungen vorbei in Richtung Prallwand in die Schichtungskammer eingeleitet wird und dass so die Wegstrecke bis zum Erreichen der Durchtrittsöffnungen vergrössert ist.

Die Einströmungsrichtung wird anfänglich durch die Austrittsöffnung und gegebenenfalls ein zur Öffnung führendes Rohrstück definiert. Die Strömungsrichtung des einströmenden Mediums kann jedoch aufgrund der Geometrie der Kammerwände eine leichte Richtungsänderung erfahren. Ist zum Beispiel die Einström- und Schichtungskammer als in der horizontalen Ebene gekrümmter Ringraum ausgebildet, so leiten die Kammerwände die Strömung in einem Bogen auf die Prallwand. Die Prallwand ist auch hier bevorzugt senkrecht zur ungefähr horizontalen Strömungsrichtung angeordnet.

Die Einström- oder Schichtungskammer erstreckt sich vorteilhafterweise über wenigstens 60%, vorzugsweise wenigstens 80% und ganz besonders bevorzugt im Wesentlichen über die gesamte Höhe des zweiten Behälters. Die Einström- oder Schichtungskammer ist in ihrem horizontalen Schnitt vorteilhaft länglich ausgebildet, bei welcher das Verhältnis von Länge zu Breite > 2 :1, vorzugsweise > 4 : 1 und besonders bevorzugt > 6 : 1 ist. Anstatt einer Einström- oder Schichtungskammer können mehrere unabhängige Kammern vorhanden sein, wobei sich bevorzugt jede Kammer über die gesamte Höhe des zweiten Behälters erstreckt. Einström-bzw. Schichtungskammern können sich gegebenenfalls über einen Teilbereich oder verschiedene Teilbereiche der Höhenerstreckung des zweiten Behälters erstrecken. Sind mehrere Einström-bzw. Schichtungskammern vorhanden, so sind diese vorteilhafterweise durch Prallwände voneinander getrennt.

Vorteilhafterweise ist die mindestens eine Durchtrittsöffnung seitlich zur Strömungsrichtung in der Trennwand, welche die Schichtungskammer von der Speicherkammer trennt, vorgesehen.

Vorteilhaft ist eine Mehrzahl von Durchtrittsöffnungen vorgesehen, welche übereinander und vorzugsweise vertikal übereinander angeordnet sind. Die Durchtrittsöffnungen verteilen sich über einen wesentlichen Teil der Höhe der Trennwand, insbesondere mindestens über die halbe Höhenerstreckung der Trennwand, oder vorteilhafterweise über dreiviertel der Höhenerstreckung der Trennwand und am vorteilhaftesten über die volle Höhe der Trennwand. Anstelle von einzelnen Durchtrittsöffnungen können auch ein oder mehrere Schlitze vorgesehen sein. Grundsätzlich können die Durchtrittsöffnungen auch axial versetzt zueinander angeordnet sein.

Vorzugsweise ist die mindestens eine Durchtrittsöffnung in einem Teil der Trennwand vorgesehen, welcher näher bei der Austrittsöffnung des Leitkanals als bei der Prallwand liegt. Um eine möglichst lange Entschleunigungsstrecke zu erzeugen, ist der Leitkanal mit der Austrittsöffnung vorzugsweise in kurzem Abstand zu der der Prallwand gegenüberliegenden Wand der Schichtungskammer angeordnet. Vorzugsweise sind die Durchtrittsöffnungen in horizontaler Richtung gesehen in der ersten Hälfte des Abstands zwischen Austrittsöffnung und Prallwand in der Trennwand, vorzugsweise im ersten Drittel, weiter bevorzugt im ersten Viertel und noch weiter bevorzugt im ersten Fünftel des Abstands vorgesehen.

Die bevorzugte Lösung sieht vor, dass die Durchtrittsöffnungen entgegen der Einströmungsrichtung gesehen hinter der Austrittsöffnung, d.h. im Schatten der Austrittsöffnung des Leitkanals, bzw. im Schatten der Einströmungsrichtung, angeordnet sind. Vorzugsweise, sind die Durchtrittsöffnungen hinter einer vertikalen Ebene angeordnet welche durch die Austrittsöffnung und senkrecht zur Einströmungsrichtung definiert ist. Vorteilhafterweise liegen die Durchtrittsöffnungen mindestens 5 cm, bevorzugt mindestens 10 cm, hinter der Austrittsöffnung und/oder mindestens 5 cm, bevorzugt mindestens 10 cm, in Gegenstromrichtung von der genannten vertikalen Ebene entfernt. Die Einströmungsrichtung bezeichnet hierbei die anfängliche Strömungsrichtung beim Austreten des Mediums aus dem Leitkanal, bzw. aus dessen Austrittsöffnung, und beim gleichzeitigen Einströmen in die Schichtkammer. Die anfängliche Strömungsrichtung bei Austritt aus der Austrittsöffnung des Leitkanals ist bevorzugt eine horizontale Strömung, insbesondre im Wesentlichen in Richtung Prallwand und weiter bevorzugt normal zur Prallwand. Dies hat den Vorteil, dass der Schichtkammerraum optimal für die Schichtung ausgenutzt werden kann. Im Übrigen wird der Anteil des einströmenden Mediums, der ohne vorher durch die Prallwand umgelenkt zu werden direkt durch die Durchtrittsöffnung(en) in die Speicherkammer strömt, gering gehalten.

Dadurch dass keine Durchtrittsöffnung unmittelbar vor und/oder seitlich der Austrittsöffnung angeordnet ist, wird sichergestellt, dass der Vorlauf nicht direkt durch eine auf etwa gleicher Höhe liegende Durchtrittsöffnung in die Speicherkammer gelangen kann, ohne sich vorher in das korrekte Temperaturniveau eingeschichtet zu haben.

Die Einbindung verschiedenster Wärmequellen kann mit dem erfindungsgemässen thermischen Schichtspeicher effizienter realisiert werden, insbesondere auch von mit Wärmepumpen arbeitenden Solarkollektoranlagen. Der thermische Schichtspeicher kann einen runden oder polygonalen Grundriss haben. In einer einfachen Ausführungsform ist an einer Aussenwand eines zentralen Behälters eine Schichtungskammer angeordnet. Diese ist im Allgemeinen bedeutend kleiner als der zentrale Behälter. Das Volumen der Schichtungskammer wird vorzugsweise so klein wie möglich, jedoch gross genug gewählt, um eine Schichtung des einströmenden Mediums zu erreichen. Das Volumenverhältnis von Schichtungskammer zu Speicherkammer liegt vorteilhaft bei 1:3 bis 1:1, bevorzugt jedoch bei 1:2 bis 1:1. Hierbei ist beim Vorhandensein von mehreren Schichtungskammern die Summe aller Schichtungskammervolumen gemeint.

Vorteilhaft ist die Prallwand wenigstens 20 cm, vorzugsweise wenigsten 30 cm, und besonders bevorzugt wenigsten 40 cm von der Austrittsöffnung entfernt. Dies hat den Vorteil, dass das einströmende Medium einen relativ langen Weg zurücklegen muss, bevor es durch die Durchtrittsöffnungen in den Schichtspeicher gelangen kann. Dadurch kann die Wassergeschwindigkeit beim Eintritt in die Schichtungskammer des thermischen Schichtspeichers auf eine Strömungsgeschwindigkeit von beispielsweise etwa 0.02 m/s oder weniger verringert werden. Es ist bekannt, dass bei solchen Strömungsgeschwindigkeiten eine optimale Schichtung realisierbar ist.

Zweckmässigerweise grenzen die beiden Behälter seitlich aneinander und grenzen sich dabei zumindest teilweise durch eine gemeinsame Wandung, bzw. eine Trennwand, voneinander ab. Die Trennwand erstreckt sich dabei vorzugsweise vertikal entlang der Erstreckung der Behälter. Im Wesentlichen erstreckt sich die Trennwand über die gesamte Höhe des ersten Behälters. Die beiden Behälter sind bevorzugt etwa gleich hoch. Um eine hohe Speichereffizienz zu erlangen, ist es von Vorteil, möglichst alle Seitenflächen - insbesondere alle seitlichen Flächen - des ersten Behälters, d.h. der Speicherkammer, mit einem zweiten Behälter einzufassen, bzw. zu umringen. Vorzugsweise bildet somit der erste Behälter eine Innenkammer, auch Speicherkammer genannt, und der zweite Behälter eine Aussenkammer, welche die Innenkammer zumindest teilweise oder vollumfänglich seitlich umringt. Hierbei kann die Wandung des ersten Behälters gleichzeitig auch Trennwand sein.

Gemäss einer bevorzugten Ausführungsform ist der erste Behälter ein zylindrischer Behälter mit einem ersten Durchmesser, und der zweite Behälter ist ein zylindrischer Behälter mit einem zweiten, grösseren Durchmesser. Der erste Behälter kann dadurch im zweiten Behälter aufgenommen sein, sodass zwischen den Behältern ein Ringraum gebildet ist. Dies ist eine besonders günstige Konfiguration, welche sich kostengünstig realisieren lässt. Durch den Ringraum wird der Schichtspeicher zudem von der Aussenwelt isoliert. Vorzugsweise sind die Prallwand oder die Prallwände an der Aussenseite des ersten Behälters angebracht, sodass dieser als Baueinheit in den zweiten Behälter einsetzbar ist. Zweckmässigerweise ist der erste Behälter koaxial im zweiten Behälter angeordnet. Andere von dieser Geometrie abweichende Ausführungsformen sind ebenso denkbar.

Vorteilhaft sind mehrere Prallwände vorgesehen, welche den Ringraum in eine Mehrzahl von Schichtungskammern oder Schichtungsnischen unterteilen. Bei Vorhandensein von mehreren Schichtungskammern können unterschiedliche Wärmeerzeuger, wie Heizkessel oder Ofen, Solarkollektoren u.a., angeschlossen sein.

Vorteilhafterweise ist der Leitkanal als Steigrohr ausgebildet. Ein solcher Leitkanal lässt sich kostengünstig herstellen. Denkbar ist jedoch auch, dass der Leitkanal Teil der Behälterwand ist. Vorteilhaft ist die Austrittsöffnung des Leitkanals als Einlaufbogen ausgebildet. Durch das Vorsehen eines Einlaufbogens oder anderer entsprechender Ausbildung des Endstücks soll erreicht werden, dass das einströmende Medium im Wesentlichen in nicht-turbulenter Strömung in die Schichtungskammer einströmt. Das heisst, durch das einströmende Medium soll die Schichtung des Mediums in der Schichtungskammer so wenig wie möglich gestört werden. Eine überwiegend horizontale Einströmung, welche z.B. dadurch erreicht wird, dass der Einlaufbogen in einen im Wesentlichen horizontalen Rohrabschnitt mündet, trägt ebenfalls zum ruhigen Einfliessen bei.

Zweckmäßigerweise ist ein Teil des Leitkanals durch die Behälterwandung nach außen geführt. An den äußeren, d.h. außen liegenden, Teil des Leitkanals ist eine, vorzugsweise seitliche, Anschlussöffnung vorgesehen, welche vorzugsweise einen kleineren Querschnitt besitzt als der Leitkanal. Dies hat den Vorteil, dass bereits an dieser Stelle eine Herabsetzung der Strömungsgeschwindigkeit realisiert ist. Vorteilhaft ist das Verhältnis des Durchflussquerschnitts des Leitkanals zu demjenigen des Anschlusses resp. der Zuführungsleitung grösser als 1 : 1, vorzugsweise grösser als 1.5 : 1, weiter bevorzugt grösser als 2 : 1 und ganz besonders bevorzugt grösser als 3 : 1. Besonders vorteilhaft ist ein Querschnittsverhältnis von wenigstens 5 : 1. Dies bewirkt eine Verlangsamung des einströmenden Mediums um ca. einen Faktor 5. Vorteilhaft ist das Verhältnis der Querschnittsfläche des Leitkanals zur Gesamtquerschnittsfläche der Durchtrittsöffnungen grösser als 3 : 1, vorzugsweise grösser als 5 : 1 und ganz besonders bevorzugt grösser als 8 : 1. Durch diese Ausgestaltung kann eine weitere Verlangsamung des Mediums bewirkt werden. Zweckmässigerweise werden die einzelnen Querschnitte der Zuleitung, des Leitkanals und der Gesamtheit der Durchtrittsöffnungen so gewählt, dass sich rechnerisch bei den Durchtrittsöffnungen eine mittlere Fliessgeschwindigkeit von weniger als ca. 0.03 m/s und vorzugsweise weniger als ca. 0.02 m/s ergibt. Beträgt beispielsweise die Strömungsgeschwindigkeit in der Zuleitung 1 m/s, so kann diese um einen Faktor 5 verringert werden, wenn der Innenquerschnitt des Leitkanals um mindestens einen Faktor 5 grösser ist als derjenige der Zuleitung. Dies heisst, dass das Medium beim Austritt aus dem Leitkanal noch eine Geschwindigkeit von 0.2 m/s hat. Wird nun die Querschnittsfläche aller Durchtrittsöffnungen zehnmal grösser gewählt als der Querschnitt des Leitkanals resp. der Austrittsöffnung, so kann die mittlere Fliessgeschwindigkeit bei den Durchtrittsöffnungen um einen Faktor 10 auf 0.02 m/s gesenkt werden. Um eine optimale Schichtung in der Schichtungskammer zu erreichen, wird man als die Querschnittsverhältnisse der Zuleitung, des Leitkanals und der Durchtrittsöffnungen so wählen, dass bei einer gegebenen Strömungsgeschwindigkeit in der Zuleitung, die resultierende Strömungsgeschwindigkeit bei den Durchtrittsöffnungen vorzugsweise kleiner als 0.03 m/s und besonders bevorzugt kleiner 0.02 m/s ist.

Durch eine seitliche Einströmung in den Leitkanal wird weiterhin bewirkt, dass das einströmende Medium verwirbelt wird und danach mit einer im Querschnitt gleichmäßigen Geschwindigkeitsverteilung durch den Leitkanal fließt, und gegebenenfalls im und mit dem Leitkanal aufsteigt. Eine zweckmässige Ausführungsform sieht vor, dass der Leitkanal, insbesondere die Anschlussöffnung des Leitkanals, mit einem Anschlussstutzen ausgeführt ist, welcher in einem Winkel, vorzugsweise in einem Winkel zwischen 60 und 120 Grad (d.h. in einem Winkel von 90±30 Grad) und bevorzugt zwischen 80 und 100 Grad (d.h. 90±10 Grad) und besonders bevorzugt in einem ungefähr rechten Winkel, in den Leitkanal mündet. Eine Mindestlänge des Leitkanals, d.h. von der Anschlussöffnung bis zur Austrittsöffnung, von bevorzugt 20 cm, weiter bevorzugt von 35 cm und noch weiter bevorzugt von 50 cm, gewährleistet, dass das austretende Medium laminar fließt.

Vorteilhaft ist der Leitkanal durch den Boden des zweiten Behälters geführt. Dies hat den Vorteil, dass das aus dem Boden ragende Fussstück als Standfuss für den Schichtspeicher dienen kann. Dabei kann ein erster Teil des Leitkanals, der durch die Behälterwandung nach aussen geführt ist, aus einem anderen Werkstoff als ein zweiter Teil des Leitkanals, der in den zweiten Behälter hineinragt, bestehen. Zweckmässigerweise besteht derjenige Teil des Leitkanals ausserhalb der Schichtungskammer aus Metall und der in der Schichtungskammer sich befindende Teil aus Kunststoff.

Vorteilhaft sind mehrere Schichtungskammern vorgesehen, und die in die Schichtungskammern mündenden Leitkanäle sind unterschiedlich lang. Die Länge der Leitkanäle kann dabei entsprechend der zu erwartenden Temperaturen des einströmenden Mediums gewählt werden. Durch eine Anpassung der Länge der Leitkanäle kann für eine effiziente Schichtung in der Schichtungskammer gesorgt werden. Für einen primären Wärmeerzeuger, wie eine Gas- oder Ölheizung, wird vorzugsweise ein relativ langer erster Leitkanal vorgesehen, welcher bis in die wärmste Zone des Schichtspeichers reicht. Für den Anschluss von Solarkollektoren wird ein kürzerer zweiter Leitkanal vorgesehen, weil die zu erwartenden Temperaturen des einströmenden Mediums im Durchschnitt tiefer liegen. Neben einer unterschiedlichen Länge können die Leitkanäle unterschiedliche Durchmesser aufweisen.

Zweckmäßigerweise kann der erste Behälter als Innenbehälter ausgebildet sein und im Wesentlichen aus Kunststoff bestehen. Der zweite Behälter kann entsprechend als Aussenbehälter ausgebildet sein und aus Metall bestehen.

Vorzugsweise ist der erste Behälter in zumindest zwei übereinander liegende Teilkammern unterteilt, welche gegeneinander wärmeisoliert sind und gegebenenfalls ist der zweite Behälter ebenfalls in zumindest zwei übereinander liegende Teilkammern unterteilt, welche gegeneinander wärmeisoliert sind. Zur Wärmeisolierung kann zum Beispiel eine Platte in horizontaler Ausrichtung im ersten Behälter und gegebenenfalls eine weitere Platte auch im zweiten Behälter angeordnet sein. Die unterteilende Platte im ersten Behälter ist vorzugsweise massiv, weist also keine durchgehenden Öffnungen auf, um einen Wärmeaustausch der oberen wärmeren Schichten mit den unteren kühleren Schichten des Wärmetransfermediums in der Speicherkammer zu verlangsamen. Die unterteilende Platte im zweiten Behälter sollte Öffnungen aufweisen, um die der Temperatur des Einströmenden Mediums entsprechende Schichtung nicht zu verhindern jedoch ein Wärmeaustausch, d.h. Wärmetransfer, der oberen wärmeren Schichten mit den unteren kühleren Schichten während Zeitperioden ohne Wärmemediumseintrag von den Wärmeerzeugern zu verlangsamen. Diese Maßnahmen tragen dazu bei, dass die Schichtung des Wärmemediums im thermischen Schichtspeicher möglichst lange aufrechterhalten bleibt. Die unterteilenden Platten beinhalten vorzugsweise wärmeisolierendes Material oder bestehen aus wärmeisolierendem Material.

Gemäß einer bevorzugten Ausführungsform ist mindestens im ersten Behälter ein Wärmetauscher eingebaut. Dieser kann als Frischwasserstation genutzt und in der oberen Hälfte des Speichers eingebaut sein. Vorteilhaft besitzt der Wärmetauscher einen ersten und einen zweiten Wärmetauscherabschnitt, wobei der erste Wärmetauscherabschnitt im zweiten Behälter und der zweite Wärmetauscherabschnitt im ersten Behälter angeordnet ist. Diese Anordnung hat den Vorteil, dass im ersten Wärmetauscherabschnitt das durchströmende Frischwasser bereits auf die in der Schichtungskammer vorherrschende Temperatur aufgewärmt werden kann. Danach gelangt das Frischwasser in den zweiten Wärmetauscherabschnitt, wo es auf die in den oberen Schichten des ersten, inneren Behälters vorherrschende Temperatur erwärmt wird. Vorteilhaft ist der Wärmetauscher aus spiral- oder wendelförmig gewickelten Wärmetauscherrohren hergestellt. Eine solche Ausführungsform hat den Vorteil, dass eine grosse Wärmetauscherfläche auf kleinstem Raum bereitgestellt werden kann. Die Wärmetauscherrohre sind vorzugsweise von unten nach oben wendelförmig gewickelt, sodass das Frischwasser beim Durchfliessen des Wärmetauschers von Schichten niedrigerer Temperatur in Schichten höherer Temperatur gelangt. Andere Arten von bekanten Wärmetauschern sind ebenfalls denkbar.

Gemäss einer weiteren bevorzugten Ausführungsform ist im zweiten Behälter, d.h. in der Schichtkammer, ein oder ein weiterer Wärmetauscher vorgesehen. Ein solcher Wärmetauscher eignet sich für den Anschluss von thermischen Solarkollektoren. Dies hat den Vorteil, dass auf einen separaten Wärmetauscher, wie dies bei bekannten Speichersystemen in der Regel erforderlich ist, verzichtet werden kann.

Nachfolgend werden bevorzugte Ausführungsbeispiele der Erfindung anhand der Zeichnung näher beschrieben.
- Fig. 1:: zeigt eine dreidimensionale schematische Ansicht eines ersten Ausführungsbeispiels eines thermischen Schichtspeichers bestehend aus einem Außenbehälter und einem koaxial darin angeordneten Innenbehälter, zwischen welchen mehrere Ringkammer ausgebildet sind, die als Schichtungskammern dienen;
- Fig. 2:: zeigt einen Schnitt durch den Schichtspeicher von Fig. 1;
- Fig. 3:: zeigt die Details eines Fußstücks;
- Fig. 4:: zeigt schematisch eine Ansicht eines zweiten Ausführungsbeispiels eines Schichtspeichers mit einem Wärmetauscher in einer Schichtungskammer;
- Fig. 5:: zeigt einen Schnitt durch den Schichtspeicher von Fig. 4;
- Fig. 6:: zeigt schematisch eine Ansicht eines dritten Ausführungsbeispiels eines Schichtspeichers mit einem Wärmetauscher, welcher beide Schichtungskammern führt, insbesondere eine Ansicht eines Schichtspeichers mit einer Frischwasserstation;
- Fig. 7:: zeigt einen Schnitt durch den Schichtspeicher von Fig. 6;
- Fig. 8:: zeigt verschiedene Beispiele von im Querschnitt runden Schichtspeichern mit Ringräumen;
- Fig. 9:: zeigt weitere Beispiele von Schichtspeichern mit polygonalem Grundriss oder mit mehreren übereinander angeordneten Schichtungskammern;
- Fig. 10:: zeigt in perspektivischer Ansicht mehrere Ausführungsbeispiele von Innenbehältern mit daran angeordneten Prallwänden und verschieden angeordneten Durchtrittsöffnungen;
- Fig. 11:: zeigt schematisch in Draufsicht verschiedene Formen von Durchtrittsöffnungen.
- Fig. 12a:: zeigt eine schematische Ansicht eines vierten Ausführungsbeispiels eines thermischen Schichtspeichers bestehend aus einem Außenbehälter und einem koaxial darin angeordneten Innenbehälter, zwischen welchen mehrere Ringkammer ausgebildet sind, die als Schichtungskammern dienen, wobei Außenbehälter und Innenbehälter eine Abschnittsdämmung aufweisen; und
- Fig. 12b:: zeigt einen Schnitt durch den Schichtspeicher von Fig. 12;

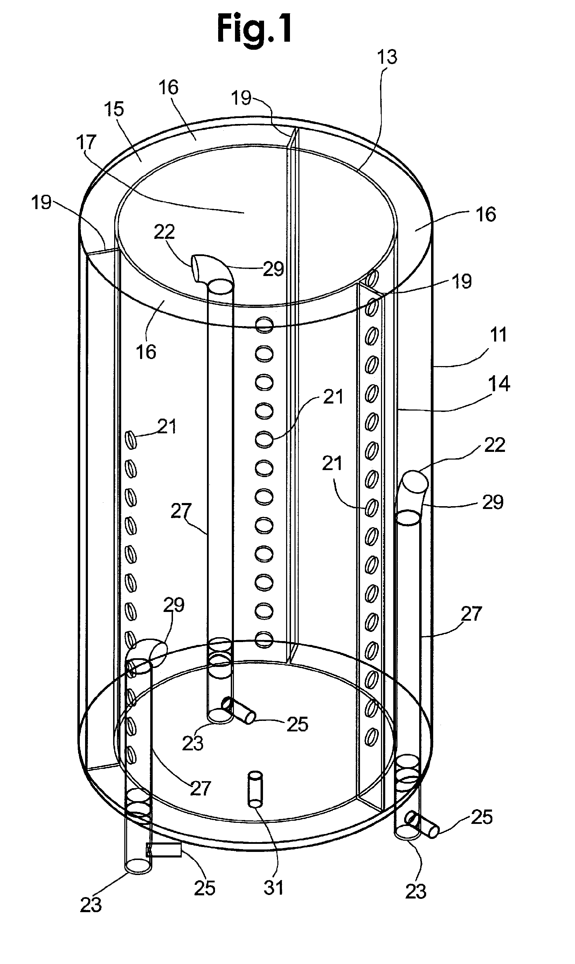

Wie aus der Schichtspeicherdarstellung nach Fig. 1 ersichtlich, weist der erfindungsgemässe thermische Schichtspeicher einen Aussenbehälter 11 auf, in welchem ein Innenbehälter 13 angeordnet ist. Der Innenbehälter 13 ist gebildet durch eine zylindrische Trennwand 14, welche in den Aussenbehälter 11 eingesetzt ist. Zwischen dem Innenbehälter 13 und dem Aussenbehälter 11 verbleibt mindestens ein freier Raum, welcher vorliegend die Gestalt eines Ringraums einnimmt. Wenn, wie im vorliegenden Ausführungsbeispiel, die bevorzugt zylindrische Trennwand 14 koaxial und mit Abstand im Aussenbehälter 11 angeordnet ist, ergibt sich ein zentraler als Speicherraum 17 dienender Innenraum und ein äusserer Ringraum 15, der als Schichtungskammer 16 dient. Der Ringraum 15 kann durch Prallwände 19 in eine Kammer oder mehrere Kammern 16 oder Ringräume unterteilt sein. Jede Kammer 16 ist mit mindestens einem Einström-oder Leitkanal, insbesondere einem Steigrohr 27 mit Einlaufbogen 29, ausgestattet, über welchen der Vorlauf aus einem in den Figuren nicht dargestellten Wärmeerzeuger einströmen kann. Sind mehrere Einström- oder Leitkanäle in einer Kammer 16 vorhanden, dann sind deren Austrittsöffnungen vorteilhafterweise auf verschiedenen Höhen-, bzw. Temperaturniveaus, angeordnet. Hierdurch können gegebenenfalls mehrere Wärmeerzeuger, entsprechend deren Vorlauftemperatur, über verschiedene Einström- oder Leitkanäle an dieselbe Kammer 16 angeschlossen werden. Kühlere Vorläufe werden dabei in tiefer liegende Bereiche eingeleitet als wärmere Vorläufe. Steigrohr 27 und Einlaufbogen 29 sind vorteilhaft so ausgestaltet, dass eine vorwiegend laminare Strömung den Einlaufbogen im Wesentlichen in horizontaler Richtung verlässt. Dies wird z.B. dadurch erreicht, dass der Einlaufbogen in einen horizontalen Rohrabschnitt mündet.

Die den Ringraum 15 vom Innenraum 17 trennende Trennwand 14 ist mit einer Mehrzahl von Durchtrittsöffnungen 21 versehen, die in vorzugsweise vertikaler Richtung übereinander angeordnet sind. Die Durchtrittsöffnungen 21 erlauben dadurch einen Mediumaustausch zwischen Ringraum 15 und Innenraum 17 auf verschiedenen Höhenniveaus.

Der Ringraum 15 (oder die darin ausgebildeten Kammern 16), hat die Aufgabe, das einströmende Medium aufzunehmen und während dessen Verweilzeit zu schichten. Die Vorläufe und/oder Rückläufe von einem oder mehreren Wärmeerzeugern fliessen hier ein und werden aufgrund ihrer spezifischen Dichte, welche temperaturabhängig ist, geschichtet. Anschliessend fliesst das geschichtete Medium durch zumindest einen Teil der Durchtrittsöffnungen 21 (ihrer jeweiligen Dichte und Temperatur entsprechend) in den Innenraum 17, der die Funktion eines Speicherraums hat, in dem kaum noch Strömung vorhanden ist. Aus dem Innen- oder Speicherraum 17 kann kaltes Wasser über einen Abfluss 31 abgezogen und in den oder die Wärmeerzeuger rückgespeist werden.

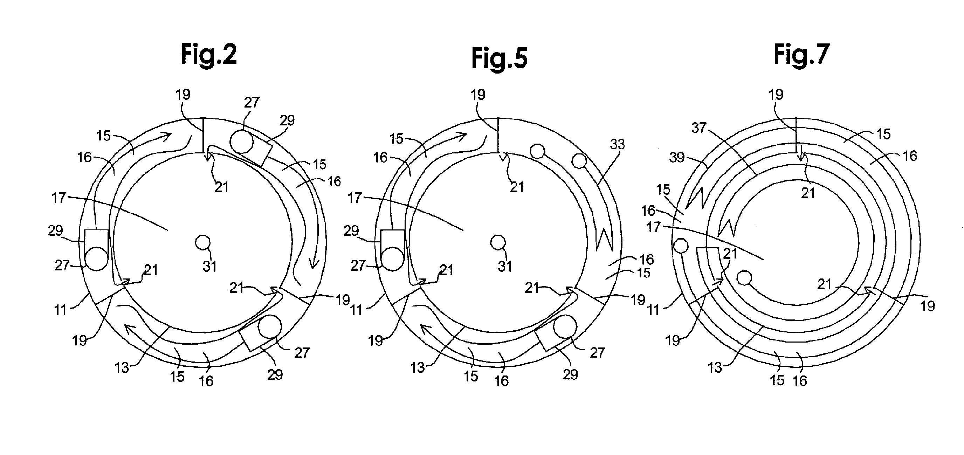

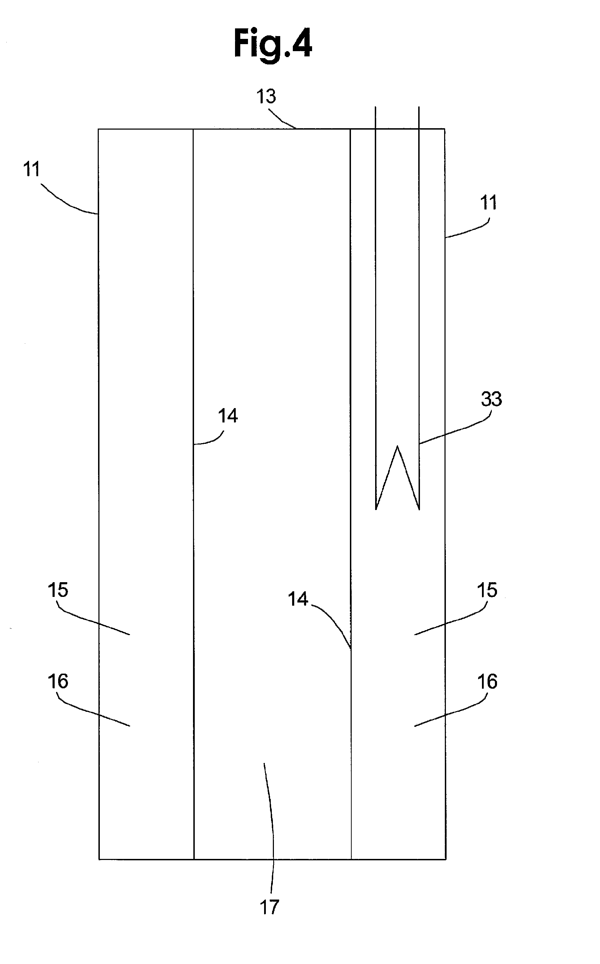

Sind mehrere Schichtungskammern 16 vorhanden, steht in der Regel für jede Schichtungskammer ein separater Leitkanal 27 zur Verfügung. Eine Ausnahme von dieser Regel liegt dann vor, wenn in der Schichtungskammer 16 ein Wärmetauscher eingebaut ist (siehe nachfolgende Beschreibung zu den Figuren 4 und 5). Im Weiteren ist jeder Schichtungskammer 16 eine Vielzahl von Durchtrittsöffnungen 21 zugeordnet, die in vorzugsweise axialer Richtung übereinander angeordnet sind. Der Vorteil von einer Anordnung mit mehreren Schichtungskammern 16 mit individuellen Leitkanälen 27, die z.B. aus Steigrohren 27 mit Einlaufbogen 29 gebildet sind, liegt darin, dass sich verschiedene Ströme, die verschiedenen Wärmeerzeugern entstammen (d.h. die Vorläufe) und über verschiedene Leitkanälen 27 in die Schichtungskammern 16 eingeleitet werden, im Vergleich zu Einkammersystemen nicht durchmischen können. Dies hat eine selektivere Schichtung und somit eine Energieersparnis zur Folge.

Nach der speziellen Ausführungsform gemäss Fig. 1 sind im Ringraum drei Abtrennungen, beziehungsweise Prallwände 19 angeordnet, zur im Wesentlichen senkrechten Aufteilung oder Unterbrechung des Ringraumes in drei Schicht 16.

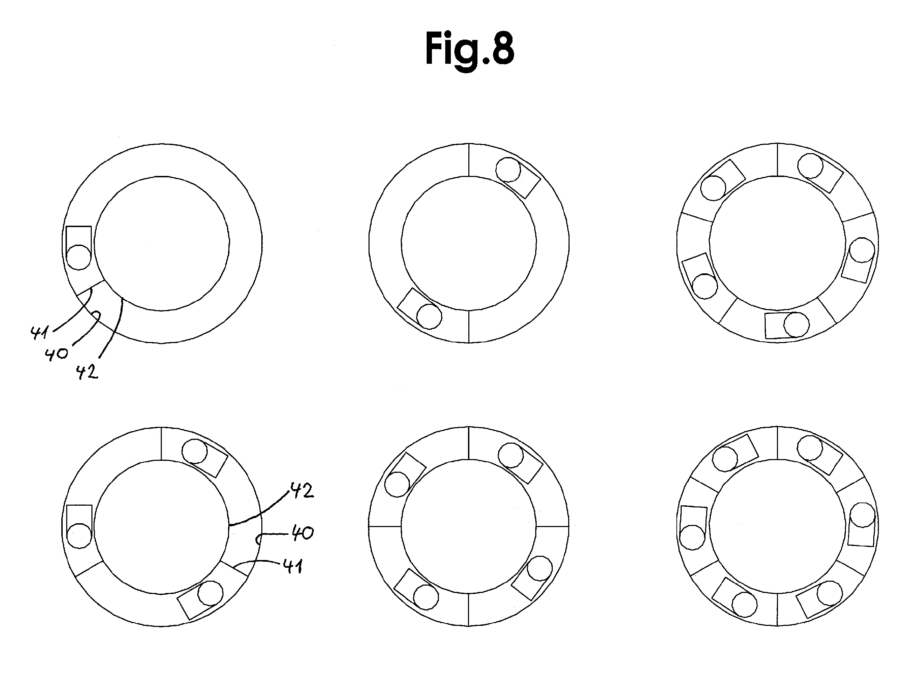

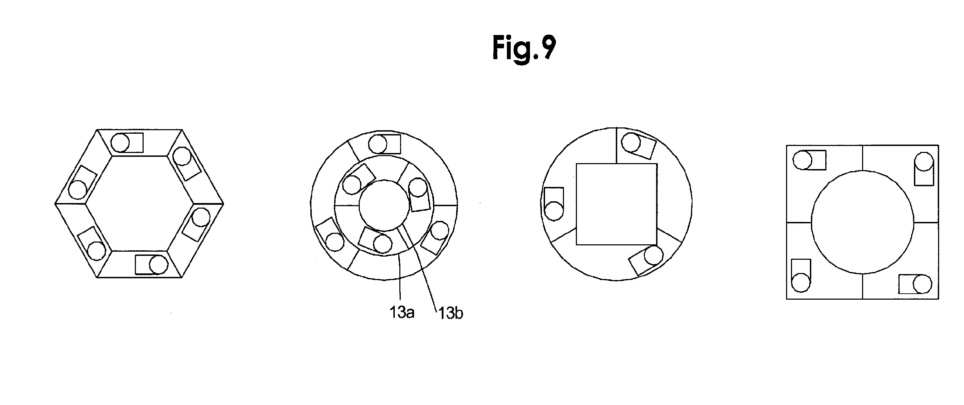

In den zusätzlichen Ausführungsformen gemäss der Fig. 8 erfolgt eine Aufteilung des Ringraums mit zumindest einer Trenn- oder Prallwand 19. Gemäss den gezeigten Ausführungsbeispielen sind eine Prallwand oder bis zu sechs Prallwänden eingesetzt, um den Ringraum in eine oder mehrere Schichtungskammern 16 zu unterteilen. Der Ringraum kann also über den Umfang, das heisst von oben als horizontaler Schnitt betrachtet, in mehrere, vorzugsweise zwei bis vier Schichtungskammern 16 aufgeteilt sein. Ein Schnittbeispiel mit drei Schichtungskammern 16 ist aus Fig. 2 ersichtlich. Weitere Schnittbeispiele mit davon abweichenden Schichtungskammerzahlen gehen aus der Fig. 8 hervor. Gemäss alternativen Beispielen in der Fig. 9 müssen weder der Aussen- noch der Innenbehälter 11, 13 im Schnitt einen kreisrunden Querschnitt aufweisen. Vielmehr sind beliebige Formgebungen denkbar, von dreieckig bis vieleckig. Besonders im Fall von speziellen Einbausituationen sind sogar unregelmässige Querschnitte möglich. Der Ringraum 15 kann infolgedessen eine beliebige, vom rein kreisförmigen Ring abweichende Geometrie aufweisen. Ferner ist darauf hingewiesen, dass auch mehr als ein Innenbehälter 13 möglich ist, siehe z.B. zweites Ausführungsbeispiel in Fig. 9 mit den Innenbehältern 13a und 13b. In dieser Ausführung mit zwei koaxial angeordneten Innenbehältern 13a, 13b sind zwei Ringräume zwiebelschichtförmig ineinander gesetzt, und beide Ringräume sind in eine Vielzahl von Schichtungskammern unterteilt.

Ein gemeinsames Merkmale der verschiedenen Ausführungsformen der Ringräume 15, d.h. der Einström- oder Schichtungskammern 16, wird im horizontalen Schnittbild deutlich (Fig. 8 und 9 (Referenznummern von Teilen gleicher Funktion sind hier beispielhaft für lediglich einige der Ausführungsbeispiele angegeben)): Eine Kammer 16 beinhaltet zumindest zwei Leitseiten 40, 42 und eine Prallseite 41. Die Prallseite 41 schliesst an jede Leitseite an und ist als vertikale Prallwand 19 ausgebildet. Die Leitseiten dienen zum Leiten des einströmenden Mediums in Richtung der Prallwand. In horizontaler Ansicht bilden die beiden Leitseiten, 40, 42 zusammen mit der dazwischenliegenden, bevorzugt kürzeren Prallseite 41 einen im Wesentlichen U-förmigen Prallbereich aus. Der Prallbereich erstreckt sich vorteilhafterweise über die gesamte Höhe der Kammer 16. Die Leitseiten 40, 42 bildet mit der Prallseite 41 an deren Kontaktpunkten, bzw. -linien vorzugsweise je einen Winkel von etwa 90 Grad. Gemäss einer alternativen Ausführung können die Winkel jedoch davon abweichen. Die Winkel sollten vorteilhafterweise im Bereich von ungefähr 60 bis 120 Grad und weiter bevorzugt von 80 bis 100 Grad liegen. Die Leitseiten 40, 42 können gekrümmt sein. Ist die erste Leitseite 40 gekrümmt, schliesst die Prallseite 41 bevorzugt auf deren konkaven Fläche an, insbesondere mit einem Winkel von 90 Grad. Eine der Leitseiten, insbesondere die innere Leitseite 42, ist gleichzeitig auch Teil der Trennwand 14. Eine Einström-oder Schichtungskammer 16 ist in ihrer horizontalen Erstreckung vorteilhaft länglich und gegebenenfalls gekrümmt ausgebildet.

Anhand des Ausführungsbeispiels nach Fig. 2 ist die Funktion des Ringraums 15, beziehungsweise der Schichtungskammer oder Schichtungskammern 16 erläutert. Der Ringraum 15 ist hier durch drei radial angelegte, vorteilhafterweise zu den Behälterwänden senkrecht angeordnete und vertikal verlaufende Prallwände 19 in drei getrennte Schichtungskammern 16 geteilt. Die Schichtungskammern 16 sind langgestreckt und weisen eine Krümmung auf.

Die Schichtungskammern 16 sind über mindestens je eine Durchtrittsöffnung 21 mit dem Speicherbehälter 17 des thermischen Schichtspeichers verbunden. Die Durchtrittsöffnungen 21 sind jeweils in der Nähe der Wand 19 angeordnet, welche auf der der Austrittsöffnung des Einlaufbogens 29 abgewandten Seite liegt. Die Austrittsöffnung 22 definiert normal zur Austrittsströmung eine Austrittsebene. In Relation zur - mittels Pfeilen kenntlich gemachten - Strömungsrichtung befinden sich die Durchtrittsöffnungen 21 jeweils hinter den Austrittsöffnungen 22 der in die vorgenannten Schichtungskammern 16 mündenden Einlaufbögen 29, beziehungsweise hinter der durch die Austrittsöffnung 22 definierten Ebene oder - anders ausgedrückt - im Schatten der Austrittsöffnung. Die Austrittsöffnungen 22 der Einlaufbögen 29 sind im Weiteren vorzugsweise deutlich näher bei der einen als bei der anderen Prallwand 19 angeordnet und so ausgerichtet, dass das einströmende flüssige Medium zunächst zur entfernteren Prallwand 19 fliesst, dort zurückgedrängt und umgelenkt wird, beziehungsweise abprallt und beim Rückströmen die Austrittsebene passiert, um durch die Durchtrittsöffnungen 21 in die Speicherkammer 17 geführt zu werden. Die Dimension des Steigrohrs 27 sowie der Abstand der Austrittsöffnung 22 von der Prallwand 19 wird entsprechend den zu erwartenden Strömungsmengen so angepasst, dass in der Schichtungskammer 16 eine Entschleunigung der Strömung so weit erreicht werden kann, das eine Schichtung des Mediums erfolgt. Durch die gegebene Anordnung wird die Strömung des durch den Ringraum 15 oder dessen einzelne Schichtungskammern 16 geführten Mediums verlangsamt und entsprechend seiner spezifischen Dichte in Bezug auf seine Umgebung gegebenenfalls durch Absinken oder Steigen geschichtet, bevor es in den zentralen Speicherbehälter 17 gelangen kann. Es sei hier angemerkt, dass alternativ jeweils auch mehrere Einströmkanäle vorhanden sein könnten.

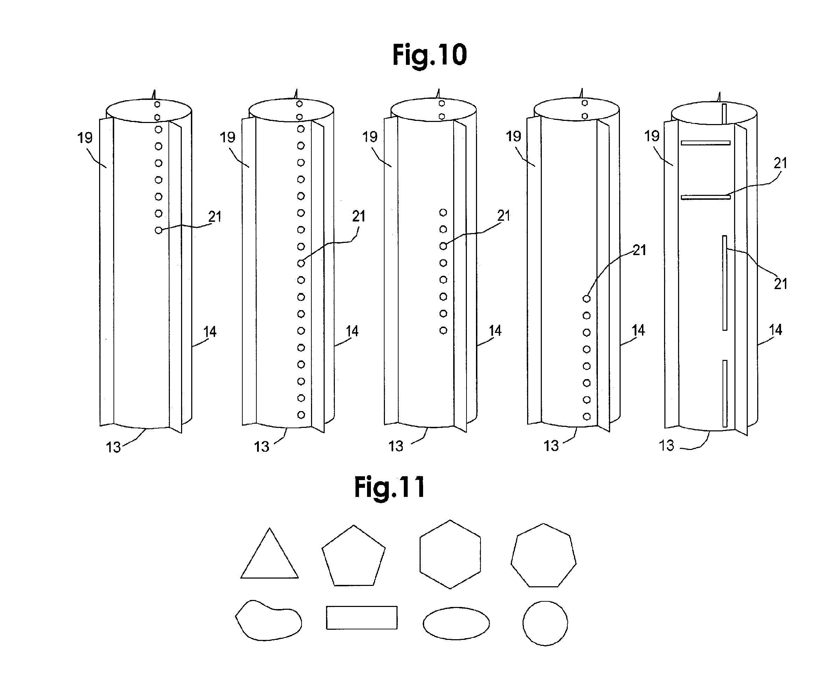

In Fig. 10 sind Prallwandausführungen mit unterschiedlicher Anordnung der Durchtrittsöffnungen 21 dargestellt. Die Prallwände 19, sind an der zylindrischen Trennwand 14 radial angebracht wie schon im Ausführungsbeispiel gemäss Fig. 2 aufgezeigt. Die Durchtrittsöffnungen 21 der Trennwand 14 sind zwischen je zwei Prallwänden 19 positioniert, wie oben beschrieben vorteilhafterweise jedoch näher an jener Prallwand 19, in dessen Nähe sich auch der Leitkanal befindet. Die Durchtrittsöffnungen 21 können dabei über die ganze Achslänge, beziehungsweise über die ganze Höhe des Zylinders verteilt sein. Dies kann von Vorteil sein, wenn die Temperatur des einströmenden Vorlaufs extremen Schwankungen unterliegt und/oder eine Schichtung in allen Dichtezonen möglich sein soll. Ist die Temperatur des Vorlaufs bekannt und/oder soll der Speicherraum 17 eine gewisse, kontrollierte Dichteschichtung erhalten, kann darauf abgestimmt eine gewisse Speicherzone ausgewählt werden, in welcher der Durchtritt des Schichtmediums zugelassen werden soll. Nur in diesen ausgewählten Zonen werden Durchtrittsöffnungen 21 angebracht. Da jede Schichtungskammer 16 mit unterschiedlich heissem Medium gefüllt werden kann, kann es von Vorteil sein, die Lage der Durchtrittsöffnungen 21 in jeder Schichtungskammer 16 individuell festzulegen.

Verschiedene Formen und Grössen der Durchtrittsöffnung 21 sind möglich. Wie in Fig. 11 aufgezeigt sind langgestreckte oder kompakte Durchtrittsöffnungsformen genau so gut einsetzbar wie kreisrunde. Denkbar ist auch, anstelle von diskreten Durchtrittsöffnungen Schlitze vorzusehen.

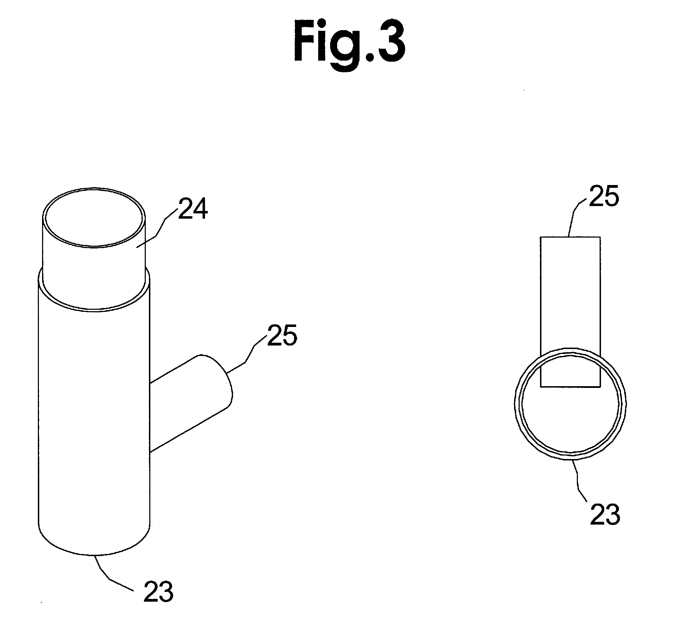

Mit Vorteil wird, noch bevor das flüssige Medium aus dem Leitkanal in den Schichtspeicher gelangt, die Fliessgeschwindigkeit des einströmenden Mediums verlangsamt. Dies wird vorzugsweise im Fußstück 23 des Steigrohrs 27 bewerkstelligt. Wie in Fig. 3 zu erkennen, besteht das Fußstück 23 des Steigrohrs 27 aus einem einseitig verschlossenen Rohrende, das über ein Führungsstück 24 an den Leitkanal 27 ansetzbar ist. Das Fußstück 23 besitzt seitlich einen in einem Winkel einmündenden Anschluss 25. Der Anschluss 25 mündet dabei so in das Fussstück 23, dass ein Aufprall des durch den Anschluss 25 einströmenden Mediums an der Innenseite des Rohrendes erfolgt. Dies hat zur Folge, dass das einströmende Medium verwirbelt wird. In Kombination mit einem relativ zum Anschlussquerschnitt größeren Rohrquerschnitt des Steigrohrs 27 kann bereits eine deutliche Herabsetzung der Einströmgeschwindigkeit erreicht werden. Durch die Verwirbelung des Mediums beim Einströmen in das Steigrohr 27 wird sichergestellt, dass das einströmende Medium über den Rohrquerschnitt gesehen eine gleichmäßige Geschwindigkeitsverteilung hat. Anstelle einer beschriebenen Zuführung des Mediums könnte auch ein Prallelement vorgesehen sein, welches das einströmende Medium verwirbelt.

Wie aus der Fig. 1 weiter hervorgeht, ist das distale Endstück des Leitkanals 27 vorzugsweise als Bogen 29 ausgebildet. Damit soll erreicht werden, dass das in die Schichtungskammer einströmende Medium im Wesentlichen als laminare Strömung einfließt. Dies hat den Vorteil, dass durch das einströmende Medium keine allzu grossen Verwirbelungen in der Schichtungskammer 16 hervorgerufen werden. Durch einen entsprechend gewählten Abstand der Prallwand 19 von der Austrittsöffnung des Leitkanals 27 kann das einströmende Medium in der Schichtungskammer entschleunigt werden. Beim Auf- und Rückprall der Strömung an der Prallwand kommt es zu einer Stauströmung, wodurch die Geschwindigkeit des einströmenden Mediums soweit herabgesetzt wird, dass das Medium sich entsprechend der Temperatur und Dichte zu schichten beginnt. Der Abstand der Prallwand von der Austrittsöffnung wird so gewählt, dass die Geschwindigkeit des Mediums nach dem Aufprall auf der Prallwand auf vorzugsweise < 0.03 m/s und ganz besonders bevorzugt < 0.02 m/s herabgesetzt ist. Es ist also zweckmässig, die Geschwindigkeit des einströmenden Mediums in wenigstens zwei Stufen herabzusetzen, nämlich ein erstes Mal beim Eintritt in den Leitkanal 27 durch Wahl eines günstigen Querschnittsverhältnisses von Zuleitung und Leitkanal, und danach in der Schichtungskammer 16 durch Wahl eines ausreichend langen Strömungsweges des einströmenden Mediums von der Austrittsöffnung bis zu den Durchtrittsöffnungen 21.

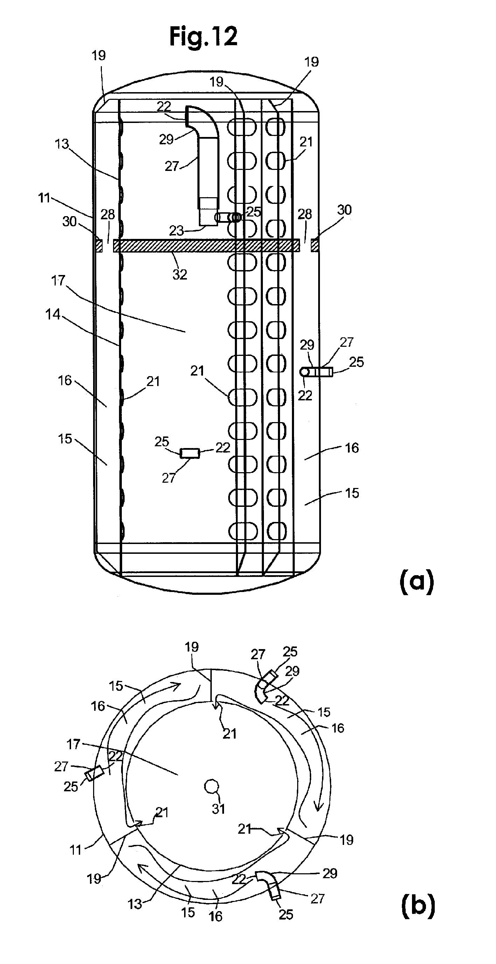

In Figuren 12a und 12b ist ein weiterer Schichtspeicher dargestellt, wobei gleiche Referenznummern Teile gleicher Funktion wie oben dargestellt bezeichnen. Im Unterschied zum Schichtspeicher dargestellt in Figuren 1 und 2 führt der Einlaufbogen 29 von außen direkt in die Schichtungskammer 16. Ein Steigrohr 27 ist optional. Der Anschlussstutzen 25 kann direkt am Einlaufbogen 29 angebracht sein. Vorteilhafterweise führt jeder Einlaufbogen auf jenem Temperaturniveau in den Schichtspeicher ein, welches möglichst der Temperatur (bzw. der Dichte) des vom Wärmeerzeuger gelieferten Wärmetransfermediums entspricht. Im Weiteren ist in Figur 12a eine Abschnittsdämmung bestehend aus einer ersten Abschnittsdämmungsplatte 32 in der Speicherkammer 17 und einer zweiten Abschnittsdämmungsplatte 30 in der Schichtungskammer 16. Die Abschnittsdämmungsplatten 30 und 32 sind horizontal ausgerichtet. Die erste Abschnittsdämmungsplatte 32 ist als massive Platte ausgeführt. Die zweite Abschnittsdämmungsplatte 30 ist vorzugsweise mit zumindest einer Ausgleichsöffnung 28 ausgestattet. Die zumindest eine Ausgleichsöffnung 28 erlauben den Auf- und/oder Abstieg von eingeströmtem Medium zur Schichtung. Die beiden Platten 30, 32 teilen Schichtungskammer und Speicherkammer in je zwei Bereiche auf, insbesondere in je zwei Teilkammern auf. Die jeweiligen zwei Bereiche, oberer und unterer Bereich, der Schichtungskammer und der Speicherkammer sind auf einer horizontalen Ebene wärmeisolierend getrennt. Die Platten 30, 32 verzögern eine Wärmeableitung von den wärmeren oberen Bereichen in die kälteren unteren Bereiche des Schichtspeichers. Diese Ausführungsform zeigt vor allem voreilhafte Speichereigenschaften während eines Betriebs mit zeitlich relativ langen Unterbrüchen in der Wärmeerzeugung, wie zum Beispiel einem Stromerzeugungsunterbruch von Solarzellen in der Nacht.

Aus Fig. 4 und 5 ist ersichtlich, dass eine Schichtungskammer 16 dazu verwendet werden kann, einen Wärmetauscher 33 aufzunehmen, welcher beispielsweise mit thermischen Solarkollektoren gekoppelt sein kann. Die Wärme, die durch diesen Wärmetauscher 33 in diese Schichtungskammer 16 abgegeben wird oder der Schichtungskammer entnommen wird, verursacht eine Schichtung der betroffenen Mediumbereiche durch rein physikalische Kräfte.

Durch die beschriebene Konstruktion des thermischen Schichtspeichers erfolgt die Schichtung im Wesentlichen innerhalb der Schichtungskammern 16. Das nach seiner Temperatur geschichtete Medium tritt erst nach erfolgter Schichtung in einem letzten Schritt durch die der jeweiligen Schichttemperatur entsprechenden Durchtrittsöffnung(en) 21 in die entsprechende Speicherschicht.

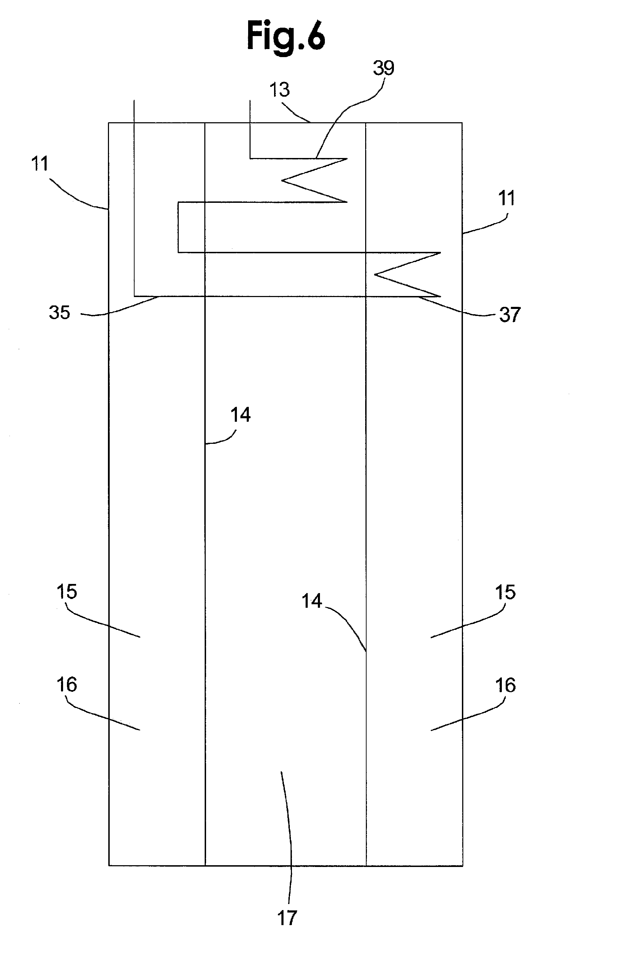

Im Weiteren kann sich, wie aus Fig. 6 und 7 ersichtlich, im oberen Bereich des Schichtspeichers eine Frischwasserstation 35 befinden. Die Frischwasserstation 35 dient dazu, aus kaltem Frischwasser warmes Frischwasser zu erzeugen. Die Frischwasserstation besteht aus einem Wärmetauscher, der aus einem ersten Wärmetauscherabschnitt 37 und einem an den ersten Wärmetauscherabschnitt 37 anschließenden zweiten Wärmetauscherabschnitt 39 besteht. Der erste Wärmetauscherabschnitt 37 erstreckt sich vorzugsweise durch die Schichtungskammer(n) 16. Der zweite Wärmetauscherabschnitt 39 ist im oberen Bereich des Speicherraums 17 angeordnet, wo die Mediumstemperatur am höchsten ist. Vorteilhaft ist der Wärmetauscher 35 aus einem Rohr, vorzugsweise Kupferrohr, eines bestimmten Durchmessers hergestellt, welches schraubenförmig aufgewickelt ist. Dabei besitzt der erste Wärmetauscherabschnitt 37 einen ersten Durchmesser, welcher ungefähr dem mittleren Durchmesser der Ringkammer 15 entspricht, und der zweite Wärmetauscherabschnitt 39 einen zweiten Durchmesser, welcher kleiner als der Durchmesser des Innenbehälters 13 ist. Denkbar ist, dass der zweite Wärmetauscherabschnitt 39 zwei oder mehr ineinander gesetzte wendelförmige Wärmetauscherabschnitte aufweist. Dadurch kann eine grosse Wärmetauscherfläche bereitgestellt werden, sodass eine Erwärmung in einem relativ schmalen Abschnitt des Schichtspeichers erfolgen kann.

Im Betrieb durchläuft das kalte Frischwasser zuerst den ersten Wärmetauscherabschnitt, der in der oder den Schichtungskammern 16 eingebaut ist. Danach gelangt das Wasser in den zweiten Wärmetauscherabschnitt, welcher im obersten Warmwasserbereich des Speicherbehälters 17 eingebaut ist. Dort wird das Wasser auf jene Temperatur angehoben, welche im obersten Bereich des Schichtspeichers vorherrscht.

Diese Variante einer Frischwasserstation 35 hat gegenüber anderen den Vorteil, dass sie gänzlich ohne Steuerung, Ventile, Pumpen sowie Messinstrumenten (Fühler, Durchflussmesser, etc.) auskommen kann. Dies hat wiederum den Vorteil, dass diese Frischwasserstation 35 ausfallsicher und kostengünstig im Unterhalt ist. Eine solche Frischwasserstation 35 erreicht ihren vollen Funktionsumfang erst in Kombination mit dem beschriebenen Schichtspeicher. Da das kalte Frischwasser zuerst durch die Schichtungskammern 16 geführt wird, kühlt es das dort befindliche warme Medium ab. Dies beeinflusst aber nicht, wie bei anderen Speichern die Temperaturschichtung des geschichteten Mediums im Speicherraum 17, sondern das abgekühlte Medium sinkt bereits in der Schichtungskammer 16 nach unten und tritt in der eigenschaftsgleichen Schicht (d.h. temperaturgleichen, bzw. dichtegleichen Schicht) wieder ein.

Der erfindungsgemässe Schichtspeicheraufbau hat signifikante Vorteile: Die im Schichtspeicher angeordnete Frischwasserkaskade benötigt keine externen Armaturen (Pumpen, Ventile, etc.), da das Wasser durch den herrschenden Wasserdruck der Frischwasserzuleitung gefördert wird. Es erfolgt keine Strömung, die durch Pumpen verursacht wird. Dies lässt die Schichtungskammer(n) 16 höchst effizient arbeiten.

Ein thermischer Schichtspeicher besitzt mindestens einen als Speicherkammer dienenden ersten Behälter zur Aufnahme eines Wärmetransfermediums und mindestens einen zweiten, an den ersten Behälter über eine Trennwand 13 seitlich angrenzenden, als Einström- und Schichtungskammer 16 dienenden zweiten Behälter. Unten am ersten Behälter ist ein erster Entnahmestutzen 31 und oben ein zweiter Entnahmestutzen (nicht dargestellt) jeweils für die Entnahme des Wärmetransfermediums vorgesehen. Am zweiten Behälter ist eine Anschlussöffnung 25 zur Zuführung des Wärmetransfermediums vorgesehen. Außerdem ist einer in der Trennwand zwischen dem ersten und zweiten Behälter mindestens eine Durchtrittsöffnung 21 vorgesehen. An den mindestens einen Anschluss 25 ist ein Leitkanal 27 angeschlossen, welcher in den zweiten Behälter führt und sich vorteilhafterweise in den zweiten Behälter erstreckt. Der Leitkanal hat eine Austrittsöffnung 22, die so angeordnet ist, dass im Betrieb im Wesentlichen eine horizontale Einströmung in die Schichtungskammer resultiert. Im Abstand von der Austrittsöffnung und vorzugsweise im Wesentlichen in Strömungsrichtung ist eine Prallwand 19 angeordnet, von welcher das einströmende Medium zurückprallt. Die Durchtrittsöffnung 21 ist in einem Teil der Trennwand 13 vorgesehen, welcher entgegen der Einströmungsrichtung gesehen hinter der Austrittsöffnung des Leitkanals liegt. Die beschriebene Anordnung hat den Vorteil, dass das einströmende Medium einen relativ langen Weg zurücklegen muss, bis es die Durchtrittsöffnungen erreicht. Durch die Prallwand 19 wird die Geschwindigkeit des einströmenden Mediums so weit herabgesetzt, dass eine Schichtung des Mediums erfolgt. Vorteilhaft wird die Geschwindigkeit des einströmenden Mediums bereits beim Eintritt in den Leitkanal ein erstes Mal herabgesetzt. Dies geschieht durch eine entsprechende Wahl der Querschnittsverhältnisse der Zuführungsleitung und des Leitkanals.

### Bezugszeichenliste:

- 11: Aussenbehälter
- 13: Innenbehälter
- 14: Trennwand
- 15: Ringraum, Ringkammer
- 16: Kammer, Schichtungskammer des Ringraums
- 17: Speicherraum, Speicherkammer
- 19: Prallwand
- 21: Durchtrittsöffnung
- 22: Austrittsöffnung
- 23: Fussstück
- 24: Führungsstück des Fussstücks 23
- 25: Anschluss, Anschlussstutzen
- 28: Ausgleichsöffnung
- 27: Steigrohr
- 29: Einlaufbogen
- 30: Zweite Abschnittsdämmungsplatte
- 31: Auslass oder Entnahmestutzen
- 32: Erste Abschnittsdämmungsplatte
- 33: Wärmetauscher
- 35: Wärmetauscher (Frischwasserstation)
- 37: Erster Wärmetauscherabschnitt
- 39: Zweiter Wärmetauscherabschnitt
- 40: Erste Leitseite
- 41: Prallseite
- 42: Zweite Leitseite

## Patentansprüche

1. Thermischer Schichtspeicher mit
- mindestens einem als Speicherkammer (17) dienenden ersten Behälter zur Aufnahme eines Wärmetransfermediums,
- mindestens einem zweiten, an den ersten Behälter über eine Trennwand (14) seitlich angrenzenden, als Einström- und Schichtungskammer (15, 16) dienenden zweiten Behälter, und
- mindestens einer in der Trennwand vorgesehenen Durchtrittsöffnung (21) zwischen dem ersten und zweiten Behälter,
**dadurch gekennzeichnet,**
- **dass** zur Zuführung des Wärmetransfermediums ein Leitkanal (27) in den zweiten Behälter führt,
- **dass** der Leitkanal (27) und eine zugehörige Austrittsöffnung (22) so ausgebildet sind, dass im Betrieb im Wesentlichen eine horizontale Einströmung des Wärmetransfermediums in den zweiten Behälter resultiert, und
- **dass** im Abstand von der Austrittsöffnung (22) in Einströmungsrichtung des Wärmetransfermediums eine Prallwand (19) angeordnet ist.

2. Thermischer Schichtspeicher nach dem vorhergehenden Anspruch, **dadurch gekennzeichnet, dass** die mindestens eine Durchtrittsöffnung (21) näher bei der Austrittsöffnung (22) des Leitkanals (27) als bei der Prallwand (19) und entgegen der Einströmungsrichtung gesehen vorzugsweise hinter der Austrittsöffnung liegt.

3. Thermischer Schichtspeicher nach einem der vorhergehenden Ansprüche, **dadurch gekennzeichnet, dass** der Abstand zwischen der Austrittsöffnung (22) und der Prallwand (19) so gewählt wird, dass Geschwindigkeit des einströmenden Wärmetransfermediums vor Erreichung der Durchtrittsöffnungen weniger als 0.03 m/s und vorzugsweise weniger als 0.02 m/s erreicht.

4. Thermischer Schichtspeicher nach einem der vorhergehenden Ansprüche, **dadurch gekennzeichnet, dass** der erste Behälter ein zylindrischer Behälter mit einem ersten Durchmesser ist und der zweite Behälter ein zylindrischer Behälter mit einem zweiten, größeren Durchmesser ist, und dass der erste Behälter im zweiten Behälter angeordnet ist, sodass zwischen den Behältern ein Ringraum (15) gebildet ist.

5. Thermischer Schichtspeicher nach einem der vorhergehenden Ansprüche, **dadurch gekennzeichnet, dass** mehrere Prallwände (19) vorgesehen sind, welche den Ringraum (15) in eine Mehrzahl von Schichtungskammern (16) oder Schichtungsnischen unterteilen.

6. Thermischer Schichtspeicher nach einem der vorhergehenden Ansprüche, **dadurch gekennzeichnet, dass** die Prallwand oder die Prallwände (19) an der Aussenseite des ersten Behälters angebracht oder ausgeformt sind, sodass dieser als Baueinheit in den zweiten Behälter einsetzbar ist.

7. Thermischer Schichtspeicher nach einem der vorhergehenden Ansprüche **dadurch gekennzeichnet, dass** das Verhältnis der Querschnittsfläche des Leitkanals (27) zur Querschnittsfläche der Zuleitung (25) grösser als 1.5 : 1, vorzugsweise grösser als 2 : 1 und ganz besonders bevorzugt grösser als 3: 1.

8. Thermischer Schichtspeicher nach einem der vorhergehenden Ansprüche **dadurch gekennzeichnet, dass** das Verhältnis der Querschnittsfläche des Leitkanals (27) zur Gesamtquerschnittsfläche der Durchtrittsöffnungen (21) grösser als 3 : 1, vorzugsweise grösser als 5 : 1 und ganz besonders bevorzugt grösser als 8 : 1.

9. Thermischer Schichtspeicher nach einem der vorhergehenden Ansprüche **dadurch gekennzeichnet, dass** der Leitkanal als Steigrohr (27) ausgebildet ist und vorzugsweise eine Länge von mindestens 20 cm hat und/oder dass die Austrittsöffnung (22) des Leitkanals (27) als Einlaufbogen (29) ausgebildet ist.

10. Thermischer Schichtspeicher nach einem der vorhergehenden Ansprüche, **dadurch gekennzeichnet, dass** ein Teil des Leitkanals (27) durch die Behälterwandung nach aussen geführt ist und an diesem äußeren Teil eine seitliche Anschlussöffnung besteht, welche vorzugsweise einen kleineren Querschnitt besitzt als der Leitkanal.

11. Thermischer Schichtspeicher nach einem der vorhergehenden Ansprüche, **dadurch gekennzeichnet, dass** der Leitkanal (27) mit einem Anschlussstutzen (25) ausgeführt ist, welcher von der Seite in einem im Wesentlichen 90 Grad Winkel mit einer Abweichung von maximal ±30 Grad in den Leitkanal (27) mündet.

12. Thermischer Schichtspeicher nach einem der vorhergehenden Ansprüche, **dadurch gekennzeichnet, dass** mehrere Schichtungskammern (16) vorgesehen sind und dass die in die Schichtungskammern (16) mündenden Leitkanäle (27) unterschiedlich lang sind und/oder unterschiedliche Durchmesser haben.

13. Thermischer Schichtspeicher nach einem der vorhergehenden Ansprüche, **dadurch gekennzeichnet, dass** eine Mehrzahl von Durchtrittsöffnungen (21) vorgesehen ist, welche vorzugsweise vertikal übereinander angeordnet sind.

14. Thermischer Schichtspeicher nach einem der vorhergehenden Ansprüche, **dadurch gekennzeichnet, dass** mindestens im ersten und/oder im zweiten Behälter mindestens ein Wärmetauscher (37, 39) eingebaut ist.

15. Thermischer Schichtspeicher nach Anspruch 14, **dadurch gekennzeichnet, dass** zumindest ein Wärmetauscher einen ersten und einen zweiten Wärmetauscherabschnitt besitzt, wobei der erste Wärmetauscherabschnitt (39) im ersten Behälter und der zweite Wärmetauscherabschnitt (37) im zweiten Behälter angeordnet ist.

16. Thermischer Schichtspeicher nach einem der vorhergehenden Ansprüche, **dadurch gekennzeichnet, dass**
- die Speicherkammer (17) in zumindest zwei übereinander liegende Bereiche unterteilt ist, welche gegeneinander wärmeisoliert sind und
- gegebenenfalls die Einström- und Schichtungskammer (16) ebenfalls in zumindest zwei übereinander liegende Bereiche unterteilt ist, welche gegeneinander wärmeisoliert sind.
